# EUROPEAN PATENT SPECIFICATION

(11) **EP 3 862 846 B1**
(45) Date of publication and mention of the grant of the patent: **26.07.2023**
(21) Application number: 20155516.6
(22) Date of filing: 05.02.2020
(51) Int. Cl.: G06F 3/01, G06F 3/048, G16Y 20/40, G16Y 40/30, H04N 5/445, G08C 17/02, G06F 21/30, G08C 23/04, H04N 21/422, H04N 21/45, H04N 21/442

(54) **METHOD AND SYSTEM FOR MANAGING REMOTE CONTROLLER OF A HOME ELECTRONIC DEVICE**
VERFAHREN UND SYSTEM ZUR VERWALTUNG DER FERNSTEUERUNG EINER ELEKTRONISCHEN HEIMVORRICHTUNG
PROCÉDÉ ET SYSTÈME DE GESTION DE LA TÉLÉCOMMANDE D'UN APPAREIL ÉLECTRONIQUE DOMESTIQUE

(43) Date of publication of application: 11.08.2021
(73) Proprietor: Vestel Elektronik Sanayi ve Ticaret A.S., 45030 Manisa (TR)
(72) Inventor: CANDAN, Murat, 45030 Manisa (TR); AKDEMIR, Onur, 45030 Manisa (TR)
(74) Representative: Flint, Adam

(56) References cited:
- WO-A2-2005/036325
- US-A1- 2013 005 250
- US-A1- 2013 258 113
- US-A1- 2015 302 738
- US-A1- 2018 013 815

## Description

### Technical Field

The invention relates to a method and system for managing a remote controller of a home electronic device.

### Technological Background

Various home electronic devices are used today. For example, a TV set or home appliance are home electronic devices used at home. These home electronic devices can be controlled by a remote controller. The number of buttons or other input elements can cause confusion for the user. In particular, children under a certain age or older users have difficulties in using the remote controller of such rendering devices. Pressing the wrong button may result in the home electronic device being unusable. This may cause loss of time, unnecessary power consumption, changing device settings, for example deleting channels and initiation a new search and so on.

It is thus necessary to provide a solution of managing a remote controller in reliable way.

US 2016/0227150 A1 discloses a method for remote control of a display device (e.g. smart TV) using a wearable device (e.g. smart watch) having a user ID. The wearable device and the display device are connected via a user device using Bluetooth. The motions/gestures generated by the user are recorded by the wearable device and transmitted to the user device which further transforms this information into control instructions for the display device. This method therefore does not address the problem of incorrect handling of a remote controller but merely replaces the remote controller by a wearable device.

CN103686329A discloses a method for synchronous control operation between a smart TV and a wearable device (e.g. smart watch) each having a source identifier. The smart TV and the wearable device are connected via Bluetooth wherein a request is generated by the wearable device/smart TV to form a communication link with smart TV/wearable device. The link, once established, allows the user to control the content on the smart TV using wearable device. Hence, also this method only replaces a remote controller but does not address the problem of managing the remote controller in a reliable way.

US 2018/013815 A1 and WO 2005/036325 A2 teach methods for triggering the identification of users when holding a portable device close to a home object and the automatic configuration of an application at the portable device for remote control of the home object based on a stored user-profile. They do not disclose the use of the user-profile info to enable the use of a different remote control.

US 2013/005250 A1 discloses how to directly transfer user-information necessary to control external devices from a portable device to a remote control

### Summary of the invention

It is therefore an object of the present invention to provide a solution which allows for managing a remote controller in a reliable way.

The invention is based on the finding that this problem can be solved by adjusting settings of the remote controller depending on the user.

The invention is defined by the independent claims. The dependent claims discuss advantageous embodiments.

Managing a remote controller according to the present invention refers to applying settings for input at the remote controller. In particular, managing therefore comprises assigning control signals to buttons or other input elements such as soft buttons on a touch screen as well as activating or deactivating individual buttons or input elements.

A home electronic device according to the present invention can so called "brown goods" or "white goods". The home electronic device can be consumer electronic devices such as rendering devices or telecommunication devices. In particular, the rendering device can be a display device such as a television set, for example smart TV, or a sound system. The white goods for which the invention can be used can be a refrigerator or washing machine, which can be controlled by a remote controller.

A user can be registered at the home electronic device. Registration of the user is preferably performed by using a user identification (user ID) of the user. Registration of the user at the home electronic device allows the user to control the home electronic device.

The portable device the proximity of which is monitored according to the present invention can be a handheld device or a wearable device. For example, the portable device can be a smart phone or a smart watch. The portable device is the device of a user who is registered with the home electronic device. This relation of the portable device and the user can be expressed by a user identification (user ID) on the portable device.

Detecting proximity of the portable device and the home electronic device means detecting whether the distance between the two devices is below a threshold. This detection is preferably performed by monitoring and comparing the physical locations of the two devices.

User recognition means according to the present invention are means, which sample the appearance of the user. In particular, the recognition means can means for sampling the face or voice of the user. The recognition of the user can be performed by comparison of the sample taken by the recognition means with pre-stored samples. The recognition means can be provided at the home electronic device or can be connected to the home electronic device. The connection can be wired or wireless.

Activating user recognition means for recognition of registered user according to the present invention means that the recognition means are triggered to take a sample. The activation or triggering is preferably performed by the home electronic device.

Personalized settings of a remote controller are settings which are stored for a specific user. In particular, the personalized settings can comprise the operations assigned to buttons of the remote controller or activation or deactivation of one or more buttons of the remote controller for the specific user.

The personalized settings are preferably stored at the home electronic device or at the remote controller. Each personalized setting is assigned to a specific user.

Loading personalized settings of remote controller means that these settings will be applied if the remote controller is being used. The personalized settings may be loaded at the home electronic device or at the remote controller. If the personalized settings are stored at the home electronic device, the personalized settings may be transmitted from the home electronic device to the remote controller.

The recognized user is a user who is registered at the home electronic device and whose identity has been confirmed by the recognition step.

By detecting the proximity of a user who is registered at the home electronic device to the home electronic device by means of the proximity of a portable device of the user, by confirming the identity of the user by recognition and by loading personalized setting for a recognized user, a number of advantages can be achieved. In particular, only control operations which are allowed for the recognized user can be performed. In addition, erroneous loading of settings of a user, whose portable device is close to the home electronic device but who himself is not in the vicinity of the home electronic device can be avoided.

According to a preferred embodiment, detecting the proximity between the portable device and the home electronic device is performed based on location information, in particular via GPS. The advantage of using GPS for determining whether the portable device is in proximity to the home electronic device, is that portable devices in general comprise a GPS unit for determining its position for example during outdoor activities. By using GPS for detecting the proximity to the home electronic device, no additional unit for determining the relative position the home electronic device has to be provided in the portable device. The location of the home electronic device can also be determined by GPS.

According to a preferred embodiment, the recognition means are a camera and recognition of registered user comprises the steps of taking a picture of user and comparing the obtained picture to a stored picture. The camera can be provided at the home electronic device. Alternatively, the camera can for example be an IP camera, which can communicate with the home electronic device. In this case, the home electronic device can trigger the camera to take a picture and the camera can send the picture or picture information to the home electronic device. The stored picture, to which the picture taken by the camera is compared, can be stored at the home electronic device or at the camera. The stored picture is preferably a picture taken from the user when registering with the home electronic device. With the camera face recognition of the user can thus be performed.

In addition or alternatively to a camera, the recognition means comprise a microphone and the recognition of the registered user comprises obtaining voice recording of user and comparing obtained voice recording with a stored recording. The microphone can be provided at the home electronic device or can be connected to the home electronic device for communication. The stored recording, to which the recorded voice taken by the microphone is compared, can be stored at the home electronic device. The stored recording is preferably a voice recording taken from the user when registering with the home electronic device. With the microphone voice recognition of the user can thus be performed.

The registration of the user at the home electronic device can be triggered by the user from the portable device.

According to one embodiment, the method comprises the steps of sending a user ID from the portable device to the home electronic device, initializing an input interface for user for inputting personal settings of remote controller and storing personalized settings in connection to user ID. Sending the user ID from the portable device is preferably carried out in a registration process. The input interface can be initialized at the home electronic device. In particular, the input interface can be displayed at the home electronic device. In a preferred embodiment, the settings, which are input to the user interface, can be input by using the portable device. In this case, the input interface can also be displayed at the portable device.

The personalized settings can in particular be assigning of functions to buttons of the remote controller as well as activating or deactivating buttons of the remote controller. The personalized settings are stored at the home electronic device. The personalized settings are preferably stored in connection with the user ID that has been obtained from the portable device. Thereby, when a portable device having this user ID is in the proximity of the home electronic device and the identity of the user has been confirmed, the personalized settings for the recognized user can be loaded by selecting the settings, which are stored for the user, ID.

During registration of the user with the home electronic device, also personal information from the user may be obtained. According to one embodiment, the method therefore comprises sending user ID from the portable device to home electronic device initializing input interface for user for providing personal information and storing personal information in connection with the user ID. The input interface may comprise a camera and/or a microphone. Thereby, personal information such as a picture or a voice sample of the user can be input and stored in connection with the user ID. Thereby, in a recognition step of a user whose portable device with the specific user ID is in proximity to the home electronic device, the stored picture and/or voice sample can be used to confirm the identity of the user with the user ID.

According to one embodiment, the method comprises in case of detecting of more than one registered user being in the proximity of the home electronic device, triggering a confirmation interface for confirmation. Preferably, the confirmation interface is provided at the home electronic device. In one embodiment, the confirmation interface comprises a list of users. By displaying the list of users who are in the proximity of the home electronic device to the user, the user can select himself as the user whose personalized settings are to be used.

Preferably, if more than one portable device with user ID is in the proximity of the home electronic device, picture information taken by a camera is transmitted to the home electronic device and the respective user is selected by means of face recognition.

In one embodiment, the method comprises determining the orientation of a display of the home electronic device relative to the user after recognition of the user and adjusting home electronic device, in particular orientation of home electronic device relative to the position of the user. In this embodiment, a gyro sensor and a servo motor combination can be provided in the home electronic device to control a motion-controlled system with home electronic device. This combination can be used to turn the display of a home electronic device towards the user by using angle information.

At least one the following steps is carried out and/or initiated by an application installed at the home electronic device:
- detecting proximity of a portable device of a user registered at the home electronic device to the home electronic device,
- activating user recognition means for recognition of registered user
- loading personalized settings of remote controller for recognized user
- taking picture of user
- comparing taken picture to stored picture
- obtaining voice recording of user
- comparing obtained voice recording with stored recording
- initializing input interface for user for inputting personal settings of remote controller
- storing personalized settings in connection with user ID
- initializing input interface for user for providing personal information
- storing personal information in connection with user ID
- in case of detecting of more than one registered user being in the proximity of the home electronic device, triggering a confirmation interface for confirmation.

According to another aspect, the invention relates to a system for managing a remote controller of a home electronic device. The system is characterized in that it is designed for carrying out the method according to the invention.

Features and advantages, which have been described with respect to the method - as far as applicable -, also refer to the system and vice versa.

### Brief description of the drawings

The present disclosure will be more readily appreciated by reference to the following detailed description when being considered in connection with the accompanying drawings in which:
Figure 1 is a schematic depiction of one embodiment of the system according to the invention;
Figure 2 is a schematic depiction of one embodiment of the system according to the invention;
Figure 3 is a schematic depiction of one embodiment of the method according to the invention; and
Figure 4 is a schematic flow chart of one embodiment of the method according to the invention.

### Detailed description of preferred embodiments

In the following, the invention will be explained in more detail with reference to the accompanying figures. In the Figures, like elements are denoted by identical reference numerals and repeated description thereof may be omitted in order to avoid redundancies.

It will be obvious for a person skilled in the art that these embodiments and items only depict examples of a plurality of possibilities. Hence, the embodiments shown here should not be understood to form a limitation of these features and configurations. Any possible combination and configuration of the described features can be chosen according to the scope of the invention.

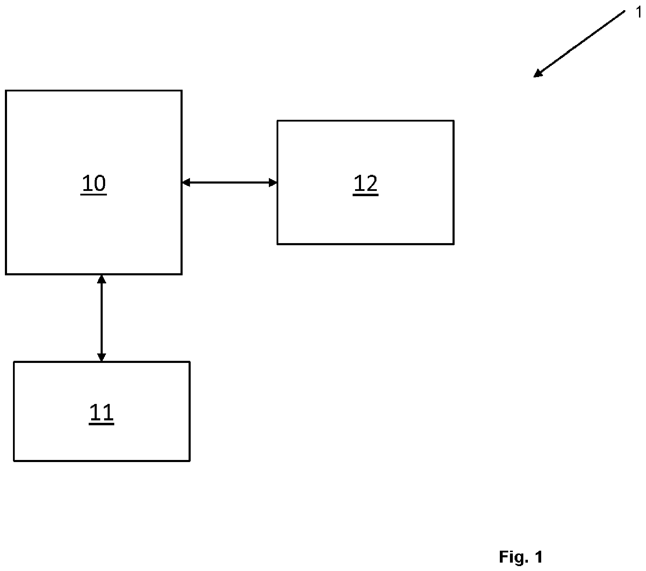

In Figure 1 the main components of a system 1 according to the invention are shown. The system 1 comprises a home electronic device 10, a portable device 12 and a remote controller 11 for the home electronic device 10. The portable device 12 can communicate with the home electronic device 10. In one embodiment, the communication between the home electronic device 10 and the portable device 12 is carried out via Bluetooth. The portable device 12 has a user ID for the user to whom the portable device 12 belongs. The remote controller 11 can communicate with the home electronic device 10. In particular, control signals can be transmitted from the remote controller 11 to the home electronic device 10. According to one embodiment, information such as settings may also be transmitted from the home electronic device 10 to the remote controller 11.

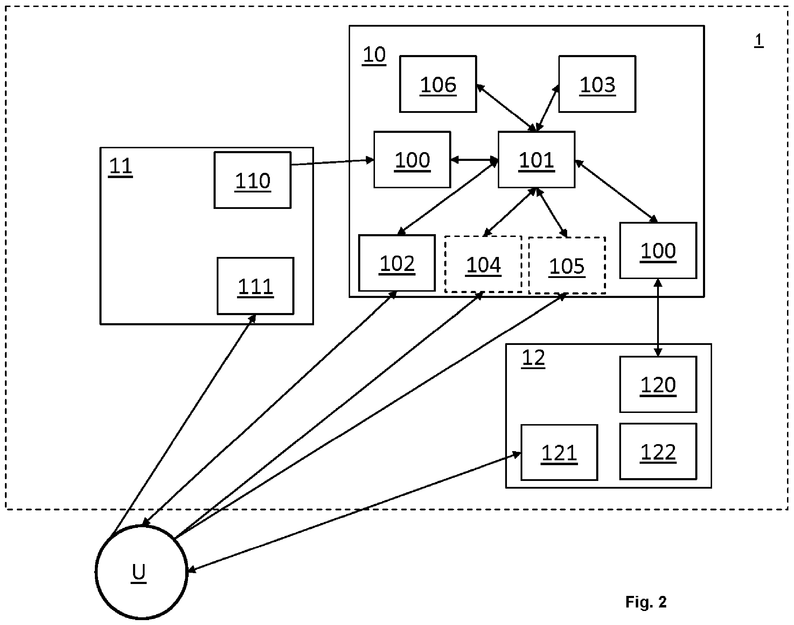

In Figure 2 an embodiment of the system 1 according to the invention is shown in more detail. In particular, the units included in the home electronic device 10, the remote controller 11 and the portable device 12 in one embodiment of the system 1 are shown in Figure 2.

In the example shown in Figure 2, the home electronic device 10 comprises a communication interface 100 for communicating with the remote controller 11. Another communication interface 100 is provided for communicating with the portable device 12. In addition, the home electronic device 10 comprises a processing unit 101 for processing information received from the portable device 12 and from units within the home electronic device 10 or other external units. In addition, the processing unit 101 may also process information or signals received from the remote controller 11. The home electronic device 10 further comprises a storage unit 103 for storing information such as settings for remote controller 11. In the depicted embodiment, the home electronic device 10 comprises a GPS unit 106 for determining the location of the home electronic device 10. The home electronic device 10 also comprises a user interface 102. The user interface may be an input/output user interface or may merely be an output user interface. In the depicted embodiment, the home electronic device 10 also comprises a camera 104 and a microphone 105. The camera 104 and microphone 105 can, however, also be provided as separate units to the home electronic device 10 which can communicate with the home electronic device 10 for example via WiFi.

The portable device 12 comprises a communication interface 120 for communicating with the home electronic device 10. The portable device 12 further includes an input/output interface 121 for displaying information to the user U and for receiving input from the user U. Furthermore, the portable device 12 comprises a GPS unit for determining the location of the portable device.

The remote controller 11 comprises a communication interface 110 for communicating with home electronic device 10 and an input unit 111 for receiving input from the user U. The input unit 111 may also comprise a display for displaying information to the user U.

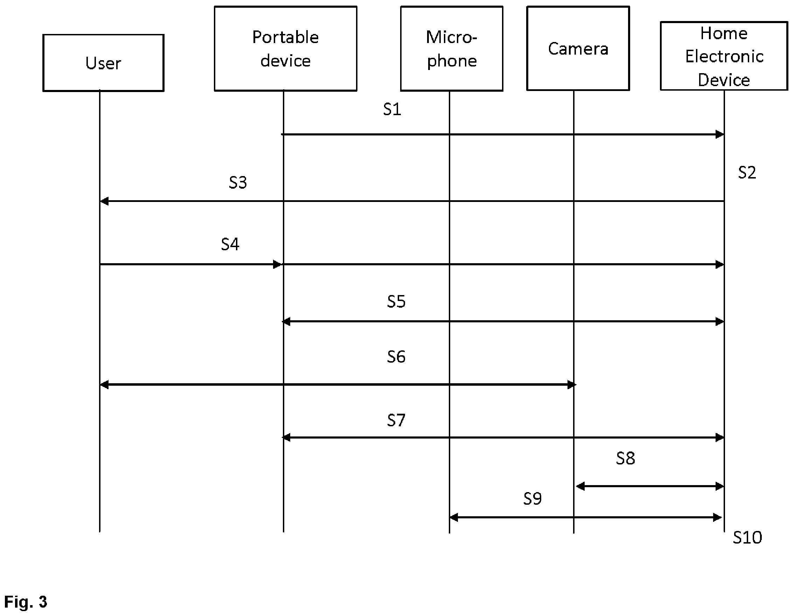

In Figure 3 an embodiment of the method according to the invention is shown. In step S1 the portable device transmits the user ID to the home electronic device 10. In step S2, the user ID is stored at the home electronic device 10. In Step S3 a setting interface is displayed at the home electronic device. The setting interface can be displayed at the user interface 102 of the home electronic device 10. In step S4 the user enters settings for the remote controller. As depicted in Figure 3, the settings may be entered at the portable device and transmitted to the home electronic device or may be entered at the home electronic device directly. The settings are then stored at the home electronic device.

Steps S1 through S4 can be referred to as registration process of the method. In these steps, the user will be registered with the home electronic device and the user ID and entered settings will be stored.

In step S5 the proximity of the home electronic device and the portable device is monitored. If a portable device with a user ID which is registered at the home electronic device is detected in the proximity of the home electronic device, step S6 is carried out. In this step S6 a camera is activated. The camera can be equipped with a face recognition algorithm. In step 7 information on whether more than one portable device with a registered user ID is in the proximity of the home electronic device is obtained. If only one user is present, in step S8 the face recognition information or the picture taken by the camera can be transmitted to the home electronic device. If more than one user is present in a subsequent step, a pop up menu is generated at the home electronic device for selection of the user whose settings for the remote controller should be applied. If the camera does not work or if the face recognition does not work, in step S9 a microphone can be activated and a voice recording can be transmitted to the home electronic device for recognition of the user. In step S10 the settings for the remote controller which are stored for the user who has been recognized, are loaded. The settings may be loaded at the home electronic device and may be transmitted to the remote controller. Alternatively, the settings are only loaded at the home electronic device and signals received from the remote controller are handled according to these settings.

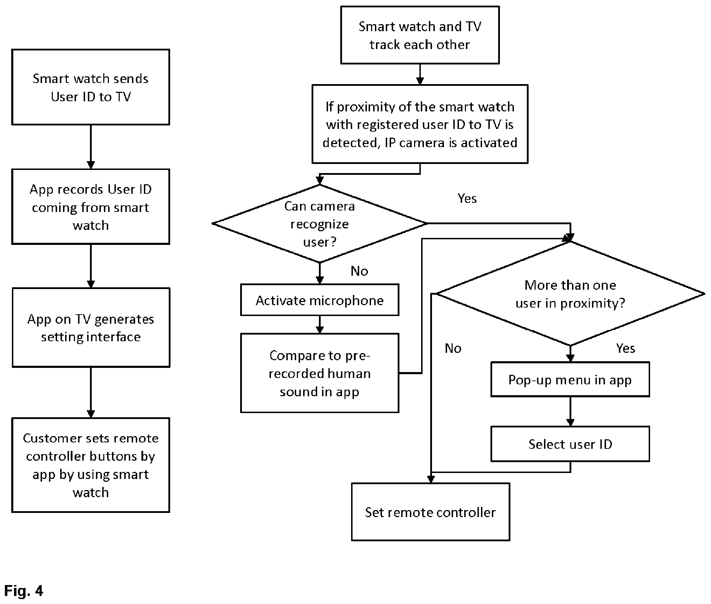

In Figure 4 another example of the method according to the invention is shown as a flow chart. In this example the home electronic device is a TV, in particular a smart TV and the portable device is a smart watch.

The smart watch which has a user ID and the TV communicate with each other by means of Bluetooth. By using a software application, which will be referred to as App, in the TV, a user interface will be generated and displayed by the operating system of the TV. This App records the user ID coming from the smart watch. Then, a setting interface appears to set remote controller buttons by the App on the TV. The desired active buttons on remote controller are set by using the smart watch. Therefore, a personal user hardware interface is activated in this way on remote control.

Additionally, the smart watch and TV are tracking each other by using GPS. When a user who has a smart watch on his arm and has a user ID in the App, comes near the TV, a camera, in particular an IP camera, will be activated. This camera has a face detection algorithm. If more than one user have a smart watch user ID in the App and are at the same GPS-location, face detection information is sent from the IP camera to the TV by a WiFi network. At that time a pop-up menu is generated and displayed by App to select which user ID could be activated. Then, remote controller is set by whichever user ID is activated.

If the IP camera cannot recognize user face, then a microphone will be active by the App to select which user ID could be activated by pre-recorded human sound in app. Hence, personalized remote control information can be activated.

In addition but not shown in the figures, a gyro sensor and a servo motor combination may be provided in the system to control a motion controlled system with a TV. This combination can be used to turn the TV towards the user by using angle information. This mentioned user can be the user who is registered with the TV and has been recognized as described above.

### List of reference numerals

- 1: System
- 10: Home electronic device
- 100: Communication interface
- 101: Processing unit
- 102: User interface
- 103: Storage unit
- 104: Camera
- 105: Microphone
- 106: GPS unit
- 11: Remote controller
- 110: Communication interface
- 111: Input unit
- 12: Portable device
- 120: Communication interface
- 121: Input/output interface
- 122: GPS unit
- U: user

## Claims

1. Method of managing a remote controller (11) of a home electronic device (10) comprising the steps of
- by the home electronic device (10), detecting proximity of a portable device (12) of a pre-registered user (U), wherein a personalized setting of the remote controller (11) for said pre-registered user (U) is stored at the home electronic device (10),
- by the home electronic device (10), upon detection of said portable device (12) in proximity, activating user recognition means (104, 105) for recognition of pre-registered user (U) and
- by the home electronic device (10), upon recognition of a pre-registered user (U), loading personalized settings of the remote controller (11) for the recognized pre-registered user (U) by either loading personalized settings of the remote controller (11) for the recognized pre-registered user (U) at the home electronic device (10) or transmitting personalized settings of the remote controller (11) for the recognized pre-registered user (U) from the home electronic device (10) to the remote controller (11).

2. Method according to claim 1, wherein detecting the proximity between the portable device (12) and the home electronic device (10) is performed based on relative location information,.

3. Method according to anyone of claims 1 or 2, wherein the recognition means (104, 105) comprise a camera (104) and recognition of pre-registered user (U) comprises:
- taking a picture of user (U) and
- comparing obtained picture to stored picture.

4. Method according to anyone of claims 1 to 3, wherein the recognition means (104, 105) comprise a microphone (105) and recognition of pre-registered user (U) comprises:
- obtaining voice recording of user (U) and
- comparing obtained voice recording with stored recording.

5. Method according to anyone of claims 1 to 4, wherein the method comprises:
- sending user ID from portable device (12) to home electronic device (10)
- by the home electronic device (10), initializing setting interface for user (U) for inputting personalized settings of remote controller (11) and
- storing personalized settings in connection with user ID.

6. Method according to anyone of claims 1 to 5, wherein the method comprises:
- sending user ID from portable device (12) to home electronic device (10)
- by the home electronic device (10), initializing input interface for user (U) for providing personal information and
- storing personal information in connection with user ID.

7. Method according to anyone of claims 1 to 6, wherein the method comprises:
- in case of detecting of more than one pre-registered user (U) being in the proximity of the home electronic device (10), triggering a confirmation interface for confirmation of user (U).

8. Method according to anyone of claims 1 to 7, wherein the method comprises determining the orientation of a display of the home electronic device (10) relative to the user, via at least one gyro sensor, after recognition of the user and adjusting home electronic device (10), in particular orientation of home electronic device (10) relative to the position of the user (U).

9. Method according to anyone of claims 1 to 8, wherein at least one of the steps is performed by an application installed on the home electronic device (10).

10. System for managing a remote controller of a home electronic device (10), **characterized in that** the system (1) is designed for carrying out a method according to anyone of claims 1 to 9, wherein said system (1) comprises
the remote controller (11)
- the home electronic device (10),
- at least one portable device (12) and
- at least one recognition means (104, 105) which is at least temporarily connected to the home electronic device (10), comprising at least one processing unit (101) and at least one application is installed in the processing unit (101).

11. System according to anyone of claim 10, wherein the recognition means (104, 105), preferably a camera (104) and/or a microphone (105), are provided at the home electronic device (10).

12. System according to anyone of claims 10 to 11, wherein the home electronic device (10) comprises at least one gyro sensor and a servo motor.

## Patentansprüche

1. Verfahren zum Verwalten einer Fernsteuerung (11) eines Heim-Elektronikgeräts (10), aufweisend die Schritte:
- durch das Heim-Elektronikgerät (10) Detektieren der Nähe eines tragbaren Geräts (12) eines vorregistrierten Benutzers (U), wobei eine personalisierte Einstellung der Fernsteuerung (11) für den vorregistrierten Benutzer (U) am Heim-Elektronikgerät (10) gespeichert wird,
- durch das Heim-Elektronikgerät (10) bei Detektion des tragbaren Geräts (12) in der Nähe Aktivieren von Benutzererkennungsmitteln (104, 105) zur Erkennung des vorregistrierten Benutzers (U), und
- durch das Heim-Elektronikgerät (10) bei Erkennung eines vorregistrierten Benutzers (U) Laden von personalisierten Einstellungen der Fernsteuerung (11) für den erkannten vorregistrierten Benutzer (U) entweder durch Laden von personalisierten Einstellungen der Fernsteuerung (11) für den erkannten vorregistrierten Benutzer (U) am Heim-Elektronikgerät (10) oder durch Übertragen von personalisierten Einstellungen der Fernsteuerung (11) für den erkannten vorregistrierten Benutzer (U) vom Heim-Elektronikgerät (10) zur Fernsteuerung (11).

2. Verfahren nach Anspruch 1, wobei das Detektieren der Nähe zwischen dem tragbaren Gerät (12) und dem Heim-Elektronikgerät (10) basierend auf Informationen des relativen Standorts durchgeführt wird.

3. Verfahren nach einem der Ansprüche 1 oder 2, wobei die Erkennungsmittel (104, 105) eine Kamera (104) aufweisen und die Erkennung des vorregistrierten Benutzers (U) aufweist:
- Aufnehmen eines Bildes des Benutzers (U), und
- Vergleichen des erhaltenen Bildes mit dem gespeicherten Bild.

4. Verfahren nach einem der Ansprüche 1 bis 3, wobei die Erkennungsmittel (104, 105) ein Mikrofon (105) aufweisen und die Erkennung des vorregistrierten Benutzers (U) aufweist:
- Erhalten der Sprachaufzeichnung des Benutzers (U), und
- Vergleichen der erhaltenen Sprachaufzeichnung mit der gespeicherten Aufzeichnung.

5. Verfahren nach einem der Ansprüche 1 bis 4, wobei das Verfahren aufweist:
- Senden der Benutzer-ID vom tragbaren Gerät (12) an das Heim-Elektronikgerät (10),
- Initialisieren der Einstellungsschnittstelle für den Benutzer (U) zum Eingeben von personalisierten Einstellungen der Fernsteuerung (11), und
- Speichern der personalisierten Einstellungen in Verbindung mit der Benutzer-ID.

6. Verfahren nach einem der Ansprüche 1 bis 5, wobei das Verfahren aufweist:
- Senden der Benutzer-ID vom tragbaren Gerät (12) an das Heim-Elektronikgerät (10),
- durch das Heim-Elektronikgerät (10) Initialisieren der Eingabeschnittstelle für den Benutzer (U) zum Bereitstellen persönlicher Informationen, und
- Speichern der persönlichen Informationen in Verbindung mit der Benutzer-ID.

7. Verfahren nach einem der Ansprüche 1 bis 6, wobei das Verfahren aufweist:
- im Fall des Detektierens von mehr als einem vorregistrierten Benutzer (U), der sich in der Nähe des Heim-Elektronikgeräts (10) befindet, Auslösen einer Bestätigungsschnittstelle zur Bestätigung des Benutzers (U).

8. Verfahren nach einem der Ansprüche 1 bis 7, wobei das Verfahren ein Bestimmen der Ausrichtung eines Displays des Heim-Elektronikgeräts (10) relativ zum Benutzer über wenigstens einen Gyrosensor nach Erkennung des Benutzers und Einstellen des Heim-Elektronikgeräts (10), insbesondere der Ausrichtung des Heim-Elektronikgeräts (10) relativ zur Position des Benutzers (U), aufweist.

9. Verfahren nach einem der Ansprüche 1 bis 8, wobei wenigstens einer der Schritte von einer auf dem Heim-Elektronikgerät (10) installierten Anwendung durchgeführt wird.

10. System zum Verwalten einer Fernsteuerung eines Heim-Elektronikgeräts (10), **dadurch gekennzeichnet, dass** das System (1) zum Durchführen eines Verfahrens nach einem der Ansprüche 1 bis 9 ausgelegt ist, wobei das System (1) aufweist:
- die Fernsteuerung (11)
- das Heim-Elektronikgerät (10),
- wenigstens ein tragbares Gerät, und
- wenigstens ein Erkennungsmittel (104, 105), das zumindest zeitweise mit dem Heim-Elektronikgerät (10) verbunden ist, wobei aufweisend wenigstens eine Verarbeitungseinheit (101) und wenigstens eine Anwendung in der Verarbeitungseinheit (101) installiert ist.

11. System nach einem Anspruch 10, wobei die Erkennungsmittel (104, 105), vorzugsweise eine Kamera (104) und/oder ein Mikrofon (105), am Heim-Elektronikgerät (10) vorgesehen sind.

12. System nach einem der Ansprüche 10 bis 11, wobei das Heim-Elektronikgerät (10) wenigstens einen Gyrosensor und einen Servomotor aufweist.

## Revendications

1. Procédé de gestion d'une télécommande (11) d'un dispositif électronique domestique (10) comprenant les étapes consistant à :
- par le dispositif électronique domestique (10), détecter la proximité d'un dispositif portable (12) d'un utilisateur préenregistré (U), dans lequel un paramètre personnalisé de la télécommande (11) destiné audit utilisateur préenregistré (U) est stocké au niveau du dispositif électronique domestique (10) ;
- par le dispositif électronique domestique (10), à la détection dudit dispositif portable (12) à proximité, activer des moyens de reconnaissance d'utilisateur (104, 105) destinés à la reconnaissance d'utilisateur préenregistré (U) ; et
- par le dispositif électronique domestique (10), à la reconnaissance d'un utilisateur préenregistré (U), charger des paramètres personnalisés de la télécommande (11) destinés à l'utilisateur préenregistré reconnu (U) soit en chargeant des paramètres personnalisés de la télécommande (11) destinés à l'utilisateur préenregistré reconnu (U) dans le dispositif électronique domestique (10), soit en transmettant des paramètres personnalisés de la télécommande (11) destinés à l'utilisateur préenregistré reconnu (U) du dispositif électronique domestique (10) à la télécommande (11).

2. Procédé selon la revendication 1, dans lequel la détection de la proximité entre le dispositif portable (12) et le dispositif électronique domestique (10) est effectuée sur la base d'informations de localisation relative.

3. Procédé selon l'une quelconque des revendications 1 à 2, dans lequel les moyens de reconnaissance (104, 105) comprennent une caméra (104) et dans lequel la reconnaissance d'utilisateur préenregistré (U) consiste à :
- prendre une image de l'utilisateur (U) ; et
- comparer l'image obtenue avec une image stockée.

4. Procédé selon l'une quelconque des revendications 1 à 3, dans lequel les moyens de reconnaissance (104, 105) comprennent un microphone (105) et dans lequel la reconnaissance d'utilisateur préenregistré (U) consiste à :
- obtenir un enregistrement vocal de l'utilisateur (U) ; et
- comparer l'enregistrement vocal obtenu avec un enregistrement stocké.

5. Procédé selon l'une quelconque des revendications 1 à 4, dans lequel le procédé consiste à :
- envoyer un identifiant d'utilisateur du dispositif portable (12) au dispositif électronique domestique (10) ;
- par le dispositif électronique domestique (10), initialiser une interface de paramétrage pour l'utilisateur (U) afin d'entrer des paramètres personnalisés de la télécommande (11) ; et
- stocker des paramètres personnalisés en relation avec l'identifiant d'utilisateur.

6. Procédé selon l'une quelconque des revendications 1 à 5, dans lequel le procédé consiste à :
- envoyer un identifiant d'utilisateur du dispositif portable (12) au dispositif électronique domestique (10) ;
- par le dispositif électronique (10), initialiser une interface d'entrée pour l'utilisateur (U) afin de fournir des informations personnelles ; et
- stocker des informations personnelles en relation avec l'identifiant d'utilisateur.

7. Procédé selon l'une quelconque des revendications 1 à 6, dans lequel le procédé consiste à :
- en cas de détection de plus d'un utilisateur préenregistré (U) se trouvant à proximité du dispositif électronique domestique (10), déclencher une interface de confirmation destinée à la confirmation de l'utilisateur (U).

8. Procédé selon l'une quelconque des revendications 1 à 7, dans lequel le procédé consiste à déterminer l'orientation d'un affichage du dispositif électronique domestique (10) par rapport à l'utilisateur au moyen d'au moins un capteur gyroscopique après la reconnaissance de l'utilisateur, et à ajuster le dispositif électronique domestique (10), en particulier l'orientation du dispositif électronique domestique (10) par rapport à la position de l'utilisateur (U).

9. Procédé selon l'une quelconque des revendications 1 à 8, dans lequel au moins l'une des étapes est effectuée par une application installée dans l'appareil électronique domestique (10).

10. Système de gestion d'une télécommande d'un dispositif électronique domestique (10), **caractérisé en ce que** le système (1) est conçu pour effectuer un procédé selon l'une quelconque des revendications 1 à 9, dans lequel ledit système (1) comprend :
- la télécommande (11) ;
- le dispositif électronique domestique (10) ;
- au moins un dispositif portable (12) ; et
- au moins un moyen de reconnaissance (104, 105) qui est au moins connecté temporairement au dispositif électronique domestique (10) qui comprend au moins une unité de traitement (101) dans laquelle est installée au moins une application.

11. Système selon la revendication 10, dans lequel les moyens de reconnaissance (104, 105), de préférence une caméra (104) et/ou un microphone (105), sont prévus dans le dispositif électronique domestique (10).

12. Système selon l'une quelconque des revendications 10 à 11, dans lequel le dispositif électronique domestique (10) comprend au moins un capteur gyroscopique et un servomoteur.
